# EUROPEAN PATENT APPLICATION

(11) **EP 1 662 777 A2**
(43) Date of publication of application: **31.05.2006**
(21) Application number: 05254824.5
(22) Date of filing: 02.08.2005
(51) Int. Cl.: H04N 5/225, G11B 31/00

(54) **Optical disk video camera**

(30) Priority: 30.11.2004 JP 2004345111
(71) Applicant: HITACHI, LTD., Chiyoda-ku Tokyo 100-8280 (JP)
(72) Inventor: Oyama, Kazuto, Hitachi, Ltd., Int. Property Group, Tokyo 100-8220 (JP)
(74) Representative: Calderbank, Thomas Roger

(57) **Abstract**

With regard to an optical disk video camera using an optical disk as a recording medium, the optical disk video camera is made smaller in size by changing a position of a battery which supplies power. In order to allow the optical disk video camera to be downsized, the battery which supplies power is arranged so that a part of the battery and a perpendicular projection plane of the optical disk overlap one another.

## Description

The present invention relates to an optical disk video camera.

As a way of example, Japanese Patent Laid-Open No. 2004-214752 discloses a background for the related art of the present invention. This publication describes as a subject, "aiming at reducing the size of the imaging apparatus which records information on a recording medium in optical disk form". It is also described as a solving means that "the imaging apparatus using an optical disk as a recording medium is constructed such that supporting portions for mounting a grip belt are provided on two structural members (not a cartridge cover) constituting a main body, respectively arranged on both sides of the imaging apparatus". It is further described "the imaging apparatus is constructed such that the optical disk is inserted or removed vertically with respect to a imaging direction. It is characterized in that a round-shaped cartridge is used as a cartridge."

Japanese Patent Laid-Open No. Hei 11-215414 is taken as an example of another background for the related art of the present invention. This publication describes as a subject, "achieving compactness compatible with good operability in a digital camera". It is further described as a solving means that, "with regard to the recording medium holding section for inserting a DVD or the like, a display section, a battery section, and a lens section, the display section and the battery section are arranged so that they are accommodated in a projection plane of the recording medium holding section, when projected from an operator who performs imaging, and the lens section is arranged in such a manner as freely rotatable at the side of the recording medium holding section, thereby achieving a compact configuration.

Japanese Patent Laid-Open No. 2001-53994 is taken as an example of another background for the related art of the present invention. This publication describes as a subject, "obtaining a thinner video camera in which a card type recording and reproducing device is built". It is further described as a solving means, "a card type recording and reproducing device 14 which records and reproduces still image data and the like on/from the card type recording medium 13 is arranged below the imaging section 4 and the view finder section 5 of a camera main body 2, and within a space 15 being a dead space between the mechanical deck section 6 and/or controller 9 and the liquid crystal monitor section 10, in such a manner that the card type recording and reproducing device 14 is substantially parallel to those elements as described above.

In recent years, an optical disk video camera (hereinafter, just referred to as "camera"), which uses an optical disk as a recording medium instead of a magnetic tape, has been introduced commercially. This camera uses as a recording medium, for example, a DVD-RAM disk being 80 mm in diameter.

Hereinafter, with regard to a conventional camera, functions and positional relationship of a camera lens section, an optical disk, an optical disk device, a liquid crystal display, and a battery will be explained.

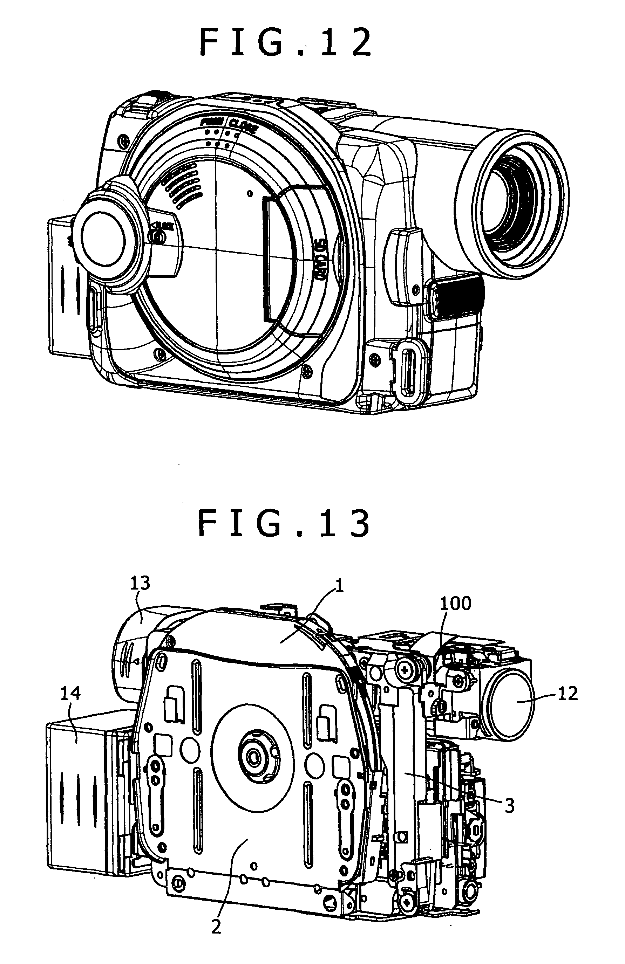

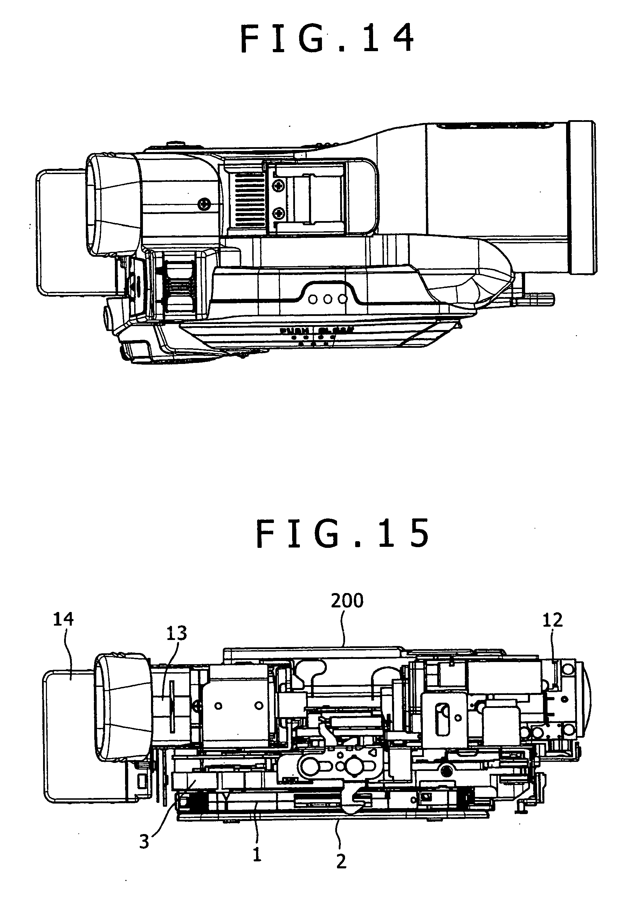

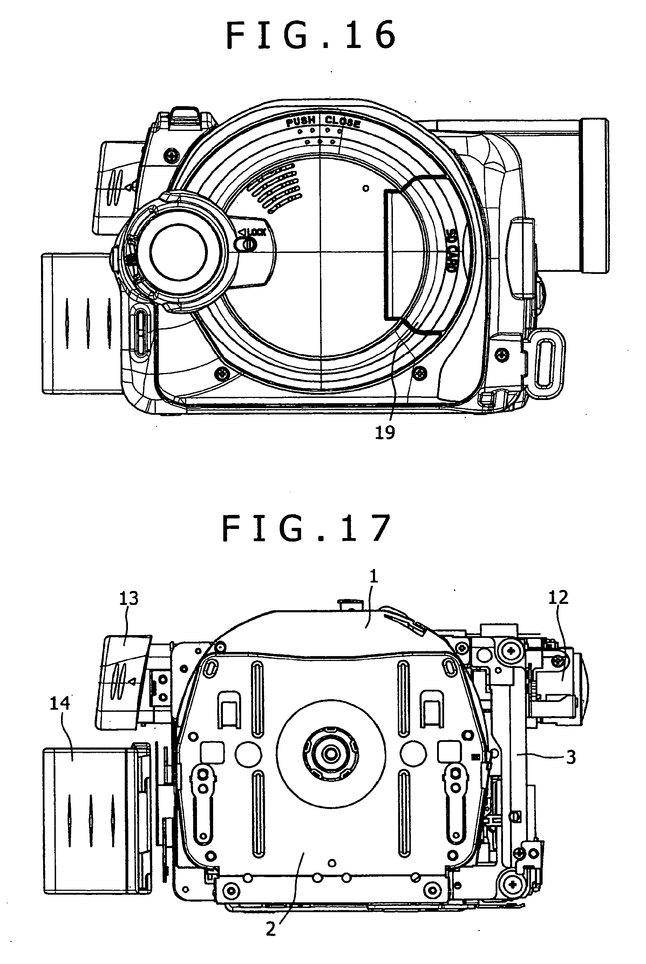

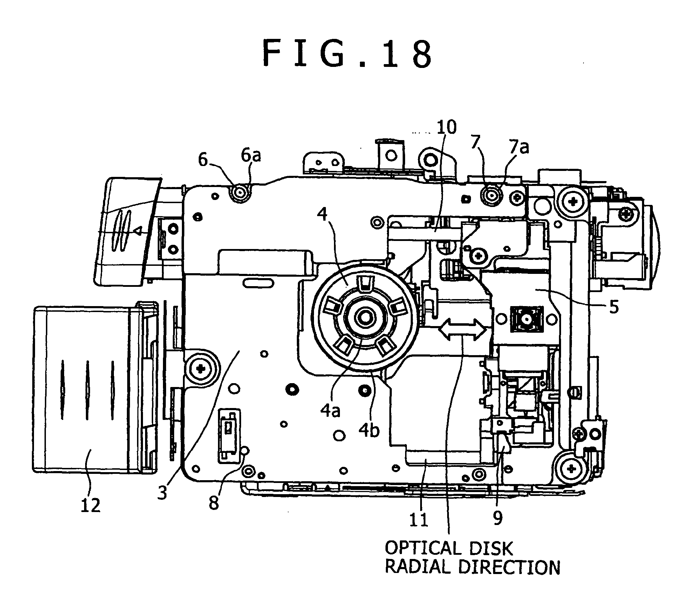

Fig. 12 is a perspective view showing the conventional camera (hereinafter, just referred to as "perspective view"). Fig. 14 is a top view showing the conventional camera (hereinafter, just referred to as "top view"). Fig. 16 is a side view showing the conventional camera (hereinafter, just referred to as "side view"). Fig. 13, Fig. 15, and Fig. 17 are illustrations with an external case and the like removed from Fig. 12, Fig. 14, and Fig. 16, respectively. Furthermore, Fig. 18 is an illustration with a cartridge-equipped optical disk 1 and an optical disk holder 2 removed from the illustration of Fig. 17.

Firstly, a camera lens section will be explained. A camera lens section 100 captures mainly video information. In many cases, it is positioned at an upper forward part of the camera main body.

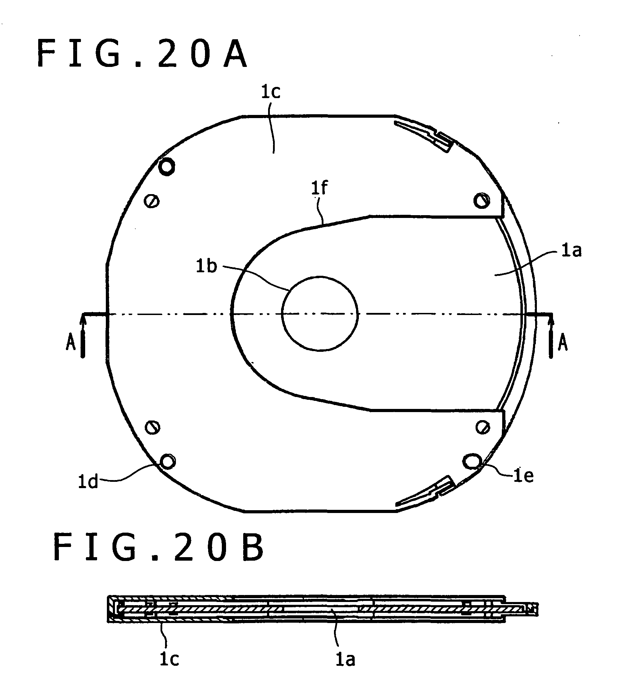

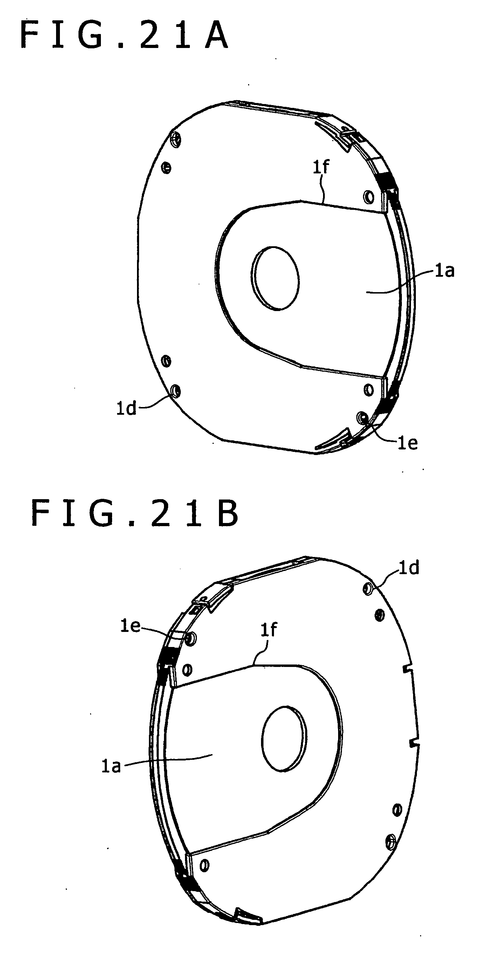

Next, the optical disk will be explained. As shown in Fig. 20A and Fig. 20B, the cartridge-equipped optical disk 1 used in the conventional camera includes an optical disk main body 1a and a cartridge 1c. The optical disk main body 1a has a hole 1b used for positioning onto a disk motor 4. The cartridge 1c has holes 1d and 1e used for positioning on a predetermined position on an optical disk device 3. Fig. 21A and Fig. 21B are perspective views of the cartridge-equipped optical disk 1. The locating holes 1d and 1e are provided on both sides of the cartridge 1c. Accordingly, any side of the cartridge-equipped optical disk 1 is allowed to be positioned on the optical disk device. In many cases, the cartridge-equipped optical disk 1 is positioned on the side surface of the camera main body. The cartridge 1c is provided with an opening 1f, so as to expose a part of the optical disk 1a. By use of the opening 1f, an optical head 5 mounted on the optical disk device 3 irradiates the optical disk 1a with laser, so as to record/reproduce video information.

Next, the optical disk device will be explained. The optical head 5 provided on the optical disk device 3 is held by a main guide bar 10 and a sub guide bar 11. The optical head 5 is movable in a radial direction of the optical disk by a power from a seek motor, not illustrated. When actually recording/reproducing of video information is carried out, the disk motor 4 allows the optical disk 1a to rotate, and the optical head 5 irradiates the optical disk 1a with a laser beam. Then, while the seek motor not illustrated moves the optical head 5 in the radial direction of the optical disk 1a, recording/reproducing is performed from the inner periphery of the disk towards the outer periphery thereof. Thus, in many cases, the optical head 5 is positioned at a position close to the position of the optical disk as described above.

Next, a liquid crystal display screen will be explained. A liquid crystal display screen 200 displays a video image captured by the lens portion 100, and also displays the video information reproduced by the optical disk device 3. In many cases, the liquid crystal display is positioned on the opposite side of a disk cover 19 with respect to the optical disk 1.

Finally, the battery will be explained. The battery, which supplies electric power to the camera having such a configuration as described above, has around 5 W in power. Generally, this battery has a large volume, compared to other portable electronic equipment (for example, portable CD, and the like). In many cases, the battery is positioned in the rear part of the camera body.

As shown in Fig. 15 and Fig. 17, as for the conventional optical disk video camera, the battery is arranged so that the battery and the disk perpendicular projection plane do not overlap one another. However, (1) it is demanded in general that a video camera be downsized as much as possible, from a viewpoint of handling ease and portability. Furthermore, (2) when the battery is arranged so that the disk perpendicular projection plane and the battery do not overlap one another, in many cases, the battery tends to protrude from the rear side of the optical disk video camera. This configuration is not preferable, since a user feels heat when he or she peers through the viewfinder 13.

Considering the situation above, the present invention aims at improving the usability of an optical disk video camera.

The object above will be achieved according to the invention as described in the appended claims.

With the present invention, it is possible to enhance the usability of the optical disk video camera.

Theses and other features, objects and advantages of the present invention will become more apparent from the following description when taken in conjunction with the accompanying drawings wherein:
Fig. 1 is an external perspective view showing an optical disk video camera according to the present embodiment;
Fig. 2 is a perspective view in which a disk cover of the optical disk video camera is in an opened state, before mounting an optical disk;
Fig. 3 is a perspective view in which the disk cover of the optical disk video camera is in an opened state, after the optical disk is mounted;
Fig. 4 is an illustration with an external case and the like removed from the illustration shown in Fig. 3;
Fig. 5 is a side view of the optical disk video camera according to the present embodiment;
Fig. 6 is an illustration with the external case and the like removed from the illustration shown in Fig. 5;
Fig. 7 is a top view of the optical disk video camera according to the present embodiment;
Fig. 8 is an illustration with the external case and the like removed from the illustration shown in Fig. 7;
Fig. 9 is an optical disk device of a conventional optical disk video camera;
Fig. 10 is a comparative diagram (1);
Fig. 11 is a comparative diagram (2);
Fig. 12 is a perspective view of the conventional optical disk video camera;
Fig. 13 is an illustration with the external case and the like removed from the illustration shown in Fig. 12;
Fig. 14 is a top view of the conventional optical disk video camera;
Fig. 15 is an illustration with the external case and the like removed from the illustration shown in Fig. 14;
Fig. 16 is a side view of the conventional optical disk video camera;
Fig. 17 is an illustration with the external case and the like removed from the illustration shown in Fig. 16;
Fig. 18 is an illustration with a cartridge-equipped optical disk 1 and an optical disk holder 2 removed from the illustration shown in Fig. 17;
Fig. 19 is a perspective view of the illustration shown in Fig. 18 to explain a method of positioning the optical disk;
Fig. 20A and Fig. 20B are respectively a side view and a cross sectional view of the cartridge-equipped optical disk; and
Fig. 21A and Fig. 21B are perspective views of the cartridge-equipped optical disk.

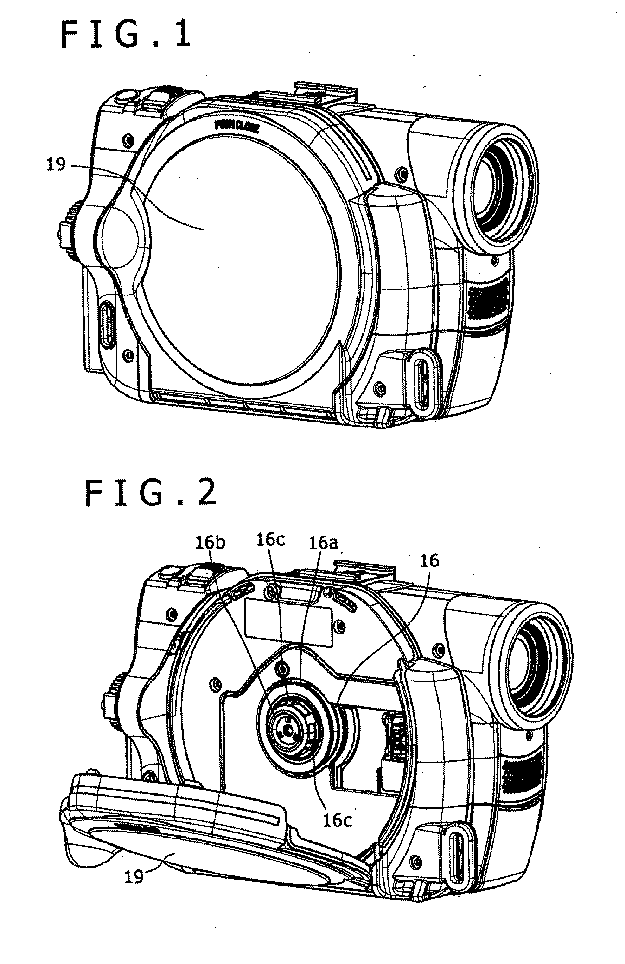

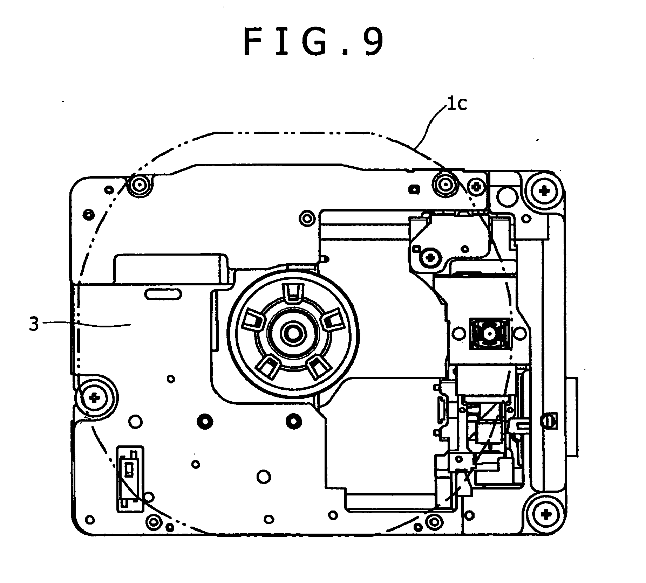

Preferred embodiments of the present invention will be explained with reference to the accompanying drawings from Fig. 1 to Fig. 11.

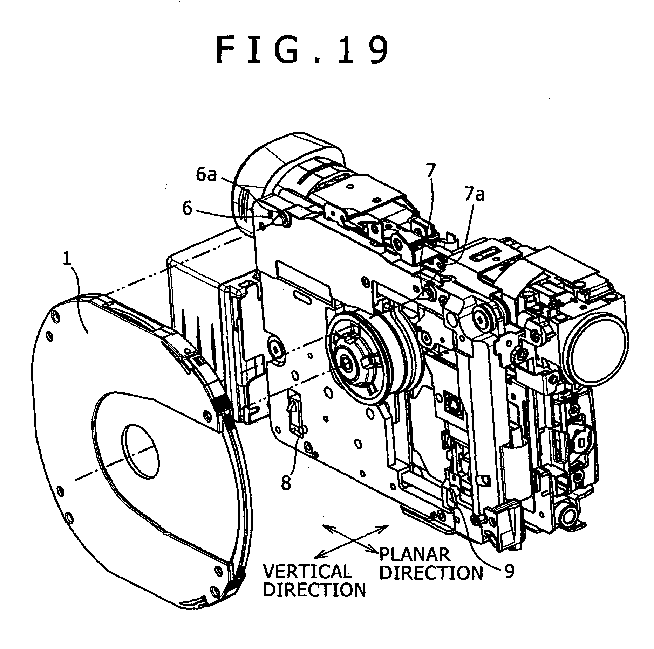

It is to be noted here that constituent elements having functions similar to those of the optical disk video camera explained with Fig. 12 to Fig. 21B are labeled with the same numbers for the sake of convenience, even though they may be different in configuration, and the operations thereof shall not be explained in detail.

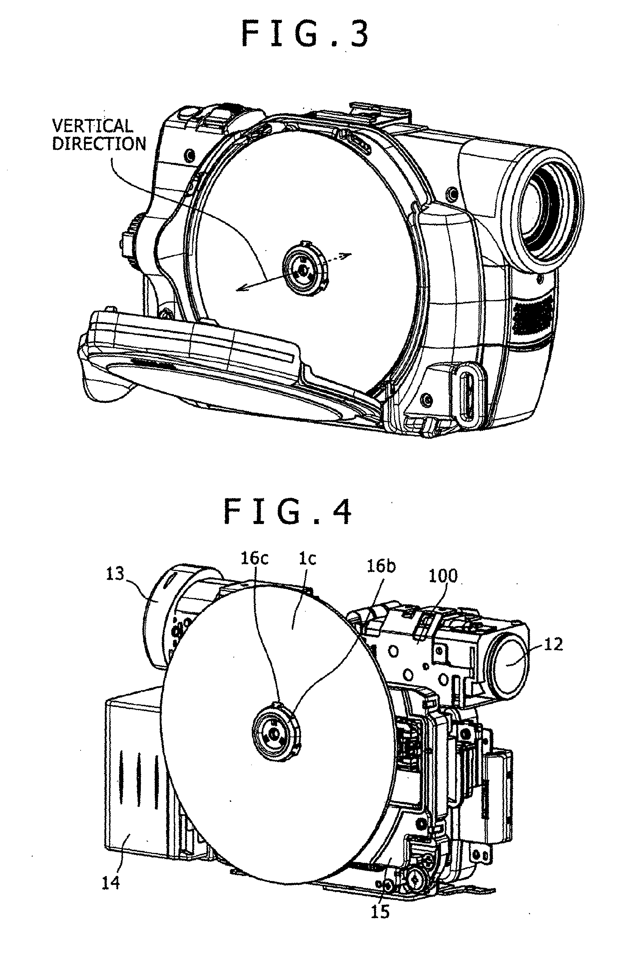

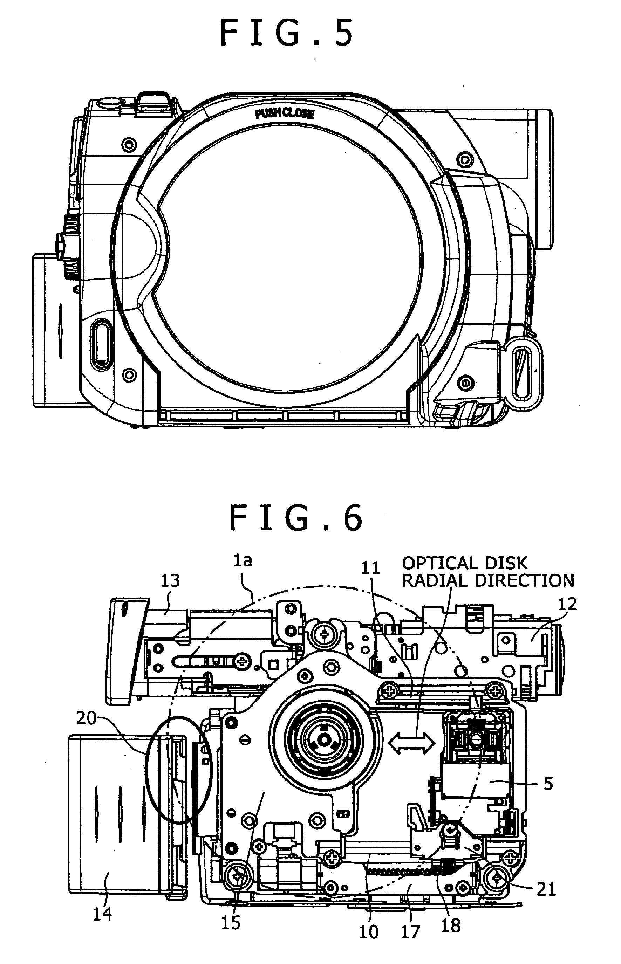

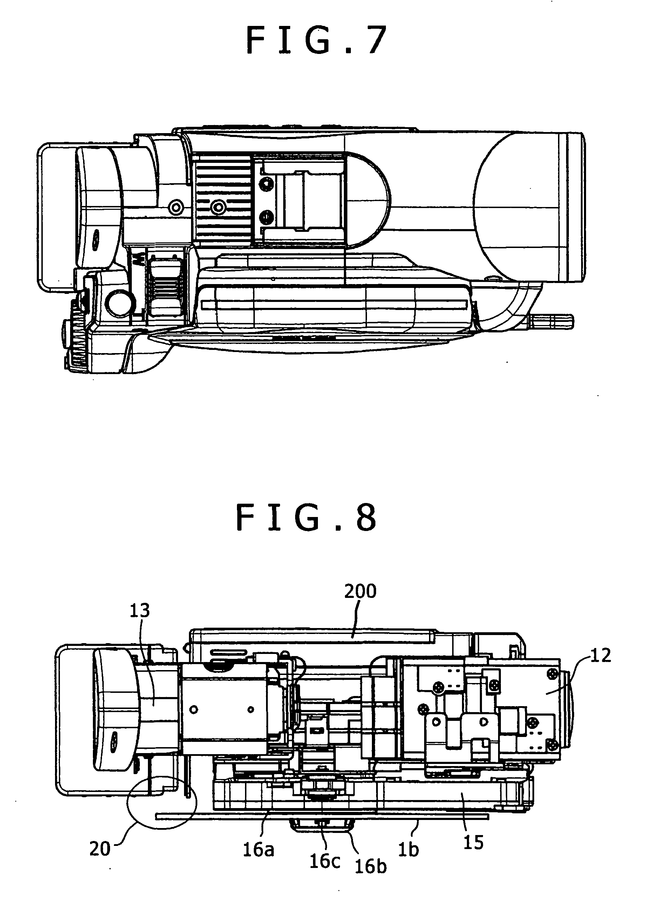

Fig. 1 is an external perspective view showing an optical disk video camera according to the present embodiment. Fig. 2 is a perspective view in which a disk cover of the optical disk video camera is in an opened state, before mounting an optical disk. Fig. 3 is a perspective view in which the disk cover of the optical disk video camera is in an opened state, after the optical disk is mounted. Fig. 4 is an illustration with an external case and the like removed from the illustration shown in Fig. 3. Fig. 5 is a side view of the optical disk video camera according to the present embodiment. Fig. 6 is an illustration with the external case and the like removed from the illustration shown in Fig. 5. Fig. 7 is a top view of the optical disk video camera according to the present embodiment. Fig. 8 is an illustration with the external case and the like removed from the illustration shown in Fig. 7.

The optical disk video camera according to the present embodiment includes a camera lens 12 which captures video information, an optical head 5 which records/reproduces the video information on/from the optical disk 1a, an optical disk device 15 including a disk motor 16 which rotates the optical disk 1a, a battery 14 which supplies power to the optical disk video camera, a viewfinder, and a liquid crystal display.

Before starting recording/reproducing of the video information, the disk cover 19 is opened, and the optical disk 1a is mounted on the optical disk device 15. Disk holding mechanism 16b on the disk motor 16 is inserted into the hole 1b of the optical disk 1a. Subsequently, when a user presses the optical disk 1a into the vertical direction as shown in Fig. 3, the optical disk 1a is held on a turntable 16a of the disk motor 16 by hooks 16c (three portions) provided on the disk holding mechanism 16b. Thereafter, the user closes the disk cover 19, and then, recording/reproducing of the video information becomes possible.

The optical head 5 is mounted in such a manner as being movable in the radial direction of the optical disk, along the main guide cover 10 and the sub guide bar 11 that are provided on the optical disk device 15 (see Fig. 6). The optical disk device 15 includes a seek motor 17 provided with a ball screw part (hereinafter, referred to as "lead screw 18") as a driving source for moving the optical head 5. Driving force from the seek motor 17 is transferred from the lead screw 18 to the lead rack 21 which is installed on the optical head. In order to record the video information onto the optical disk 1a, the disk motor 16 rotates the optical disk 1a, and the optical head 5 irradiates the optical disk 1a with the laser beam. While the seek motor 17 moves the optical head 5 in the radial direction of the optical disk (see Fig. 6), recording is performed from the disk inner periphery to the disk outer periphery.

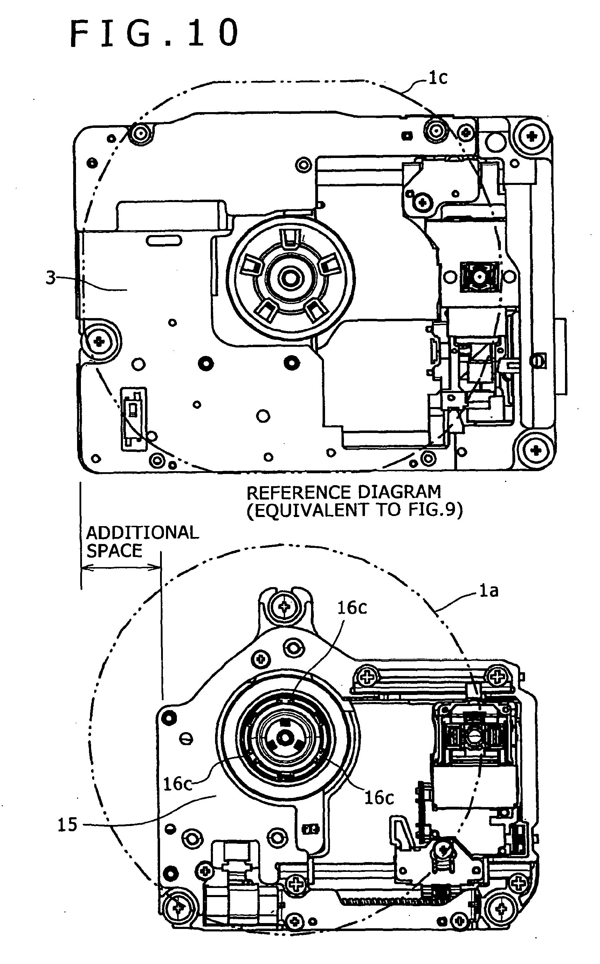

Here, since the optical disk video camera according to the present embodiment is prepared for a bare optical disk 1a without a cartridge, positioning pins 6, 7 and placement planes 6a, 7a, 8, and 9 for the cartridge 1c, provided on the conventional optical disk device 3, and the optical disk holder 2 are not necessary any more. Fig. 10 is a shape comparative diagram between the conventional optical disk device 3 and the optical disk device 15 according to the present embodiment. In the optical disk device 15 according to the present embodiment, a shape on the side being opposite to the side where the optical head 5 and holding member/driving mechanism of the optical head 5 are installed, is largely cut off.

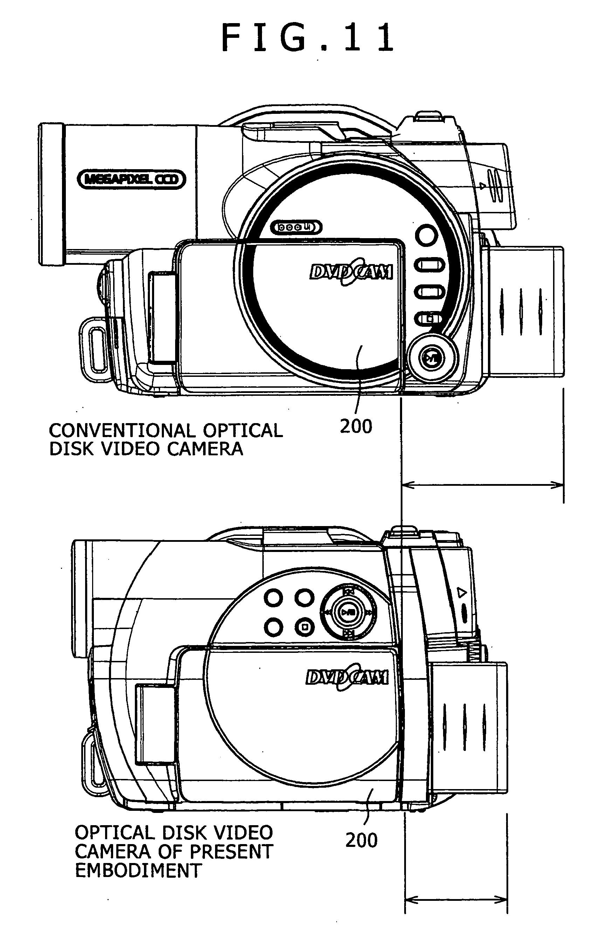

In the optical disk video camera according to the present embodiment, a layout of the battery 14 is set as shown in Fig. 6 and Fig. 8, and it is positioned in such a manner that a part of the battery and the perpendicular projection plane of the optical disk overlap one another. Reference numeral 20 in Fig. 6 and Fig. 8 represents the overlapped portion. Fig. 11 shows an effect of the present embodiment. In the conventional optical disk video camera, the battery and the perpendicular projection plane of the optical disk are arranged so that they do not overlap one another. However, in the embodiment of the present invention, the battery is arranged so that a part of the battery and the perpendicular projection plane of the optical disk overlap one another, thereby achieving a downsizing of the product. In addition, with respect to the center axis of the optical disk rotation, the optical head 5 of the optical disk device and the holding member and driving mechanism of the optical head 5 are provided on the opposite side of the battery position. It is also possible to configure such that a part of the installation plane of the video camera main body for installing the battery may be within the perpendicular projection plane of the optical disk. Further in the present embodiment, as understood from Fig. 11, the battery 14 and the liquid crystal display 200 are arranged so that they do not overlap one another. With this configuration, compared to the case where the battery is allowed to slip into the position overlapped with the liquid crystal display, the optical disk video camera can be configured thinner in shape.

According to the present embodiment, compared to the case where the battery is not arranged in the perpendicular projection plane of the optical disk, the moment from the disk center due to the battery weight is made smaller, thereby achieving a camera which is easily carried by a user. Furthermore, compared to the case where the battery is not arranged in the perpendicular projection plane of the optical disk, the battery is arranged into a more unified configuration with the camera body, and it works advantageously against a dropping impact and the like. When the user tries to use the viewfinder, he or she hardly feels heat compared to the case where the battery is not arranged in the perpendicular projection plane of the optical disk. In this configuration, a long slide distance is not necessary for the viewfinder.

The optical disk video camera main body is provided with a imaging module, positioned on the front surface, for obtaining video information, a recording module, positioned on one side surface, for recording on the optical disk the video information obtained by the imaging module, and a power supply module, positioned on the back surface, for supplying power to drive the recording module, wherein, a part of the power supply module and the perpendicular projection plane of the optical disk are arranged to overlap one another, thereby making the height of the video camera approximately the same as the disk diameter, and making the shape easy to carry when a user holds one side surface.

The optical disk video camera is further provided with a liquid crystal display module, positioned on the other side surface, for displaying the video information obtained by the imaging module, wherein, the power supply module and the liquid crystal display module are arranged within the perpendicular projection plane of the optical disk in such a manner that the power supply module and the liquid crystal display module do not overlap one another, thereby making the width of the video main body thinner, when viewed from the back surface thereof.

The optical disk video camera is provided with the imaging module, positioned on the front surface, for obtaining the video information, the recording module, positioned on one side surface, for recording on the optical disk the video information obtained by the imaging module, and an installation plane positioned on the back surface, on which the power supply module to supply power for driving the recording module is installed, wherein a part of the installation plane is arranged vertically within the perpendicular projection plane of the optical disk, thereby achieving an effective use of the other side surface, such as placing a display unit, buttons necessary for various imaging operations. Therefore, usability is enhanced for the user.

While we have shown and described several embodiments in accordance with our invention, it should be understood that disclosed embodiments are susceptible of changes and modifications without departing from the scope of the invention. Therefore, we do not intend to bound by the details shown and described herein but intend to cover all such changes and modifications a fall within the ambit of the appended claims, as interpreted by the description and drawings.

## Claims

1. An optical disk video camera which records video information on an optical disk, comprising;
a imaging module, positioned on a front surface, which obtains the video information;
a recording module, positioned on one side surface, which records on the optical disk the video information obtained by the imaging module; and
a power supply module, positioned on a back surface, which supplies power to drive the recording module, wherein
the power supply module is arranged in such a manner that a part of the power supply module and a perpendicular projection plane of the optical disk overlap one another.

2. The optical disk video camera according to claim 1, further comprising a liquid crystal display module, positioned on the other side surface, which displays the video information obtained by the imaging module, wherein
the power supply module and the liquid crystal display module are positioned so as not to overlap one another within a perpendicular projection plane of the optical disk.

3. The optical disk video camera according to claim 2, wherein
the power supply module is a battery.

4. An optical disk video camera which records video information on an optical disk, wherein
a main body of the optical disk video camera is provided with:
a imaging module which obtains the video information;
a recording module which records on the optical disk the video information obtained by the imaging module; and
an installation plane on which a power supply module to supply power to drive the recording module is installed, wherein
a part of the installation plane is arranged vertically within a perpendicular projection plane of the optical disk.

5. An optical disk video camera which records video information on an optical disk, comprising:
a imaging module which obtains the video information;
a recording module which records on the optical disk the video information obtained by the imaging module; and
a power supply module which supplies power to drive the recording module, wherein
the power supply module is arranged in such a manner that a part of the power supply module and a perpendicular projection plane of the optical disk overlap one another.

6. The optical disk video camera according to claim 5, comprising a liquid crystal display module which displays the video information obtained by the imaging module, wherein
the power supply module and the liquid crystal display module are positioned so as not to overlap one another within a perpendicular projection plane of the optical disk.

7. The optical disk video camera according to claim 6, wherein
the power supply module is a battery.

8. The optical disk video camera according to claim 7, comprising an opening module into which the optical disk is inserted, wherein
with respect to the optical disk, the liquid crystal display module is arranged on an opposite side of the opening module.

9. An optical disk video camera which records video information on an optical disk, comprising:
a imaging module which obtains the video information;
a recording module which records on the optical disk the video information obtained by the imaging module; and
an installation plane on which a power supply module to supply power to drive the recording module is installed, wherein
a part of the installation plane is arranged within a perpendicular projection plane of the optical disk.

10. An optical disk video camera comprising:
a camera lens which captures video information to be imaged; and
an optical disk device which records the video information on an optical disk, wherein
the optical disk is a bare disk without a cartridge, and
a battery which supplies power to the optical disk video camera is arranged so that a part of the battery and a perpendicular projection plane of the optical disk overlap one another.

11. The optical disk device of the optical disk video camera according to claim 10, comprising:
an optical head which writes data on the optical disk; and
a drive section which moves the optical head in a radial direction of the optical disk, wherein
the drive section is arranged on an opposite side of the battery.
